# DEMANDE DE BREVET EUROPEEN

(11) **EP 4 779 121 A1**
(43) Date de publication de la demande: **22.07.2026**
(21) Numéro de dépôt: 25305051.2
(22) Date de dépôt: 16.01.2025
(51) Int. Cl.: F01D 5/14, B22F 5/04, F01D 17/16, F01D 5/28, F01D 9/04

(54) **ENSEMBLE DESTINÉ À ÊTRE CALÉ EN INCIDENCE AU SEIN D'UN REDRESSEUR DE COMPRESSEUR DE TURBOMACHINE D'AÉRONEF, COMPRESSEUR DE TURBOMACHINE D'AÉRONEF ET TURBOMACHINE D'AÉRONEF**

(71) Demandeur: SAFRAN, 75015 Paris (FR); Safran Aero Boosters, 4041 Herstal (BE)
(72) Inventeur: DUNLEAVY, Patrick, 77750 MOISSY-CRAMAYEL (FR); DERCLAYE, Alain Michel, 77750 MOISSY-CRAMAYEL (FR)
(74) Mandataire: Santarelli

(57) **Abrégé**

L'invention concerne un ensemble (21) destiné à être calé en incidence au sein d'un redresseur de compresseur de turbomachine d'aéronef, comportant une première plateforme (50) et une seconde plateforme (52), ainsi que deux aubes de stator (20) présentant chacune un pied d'aube solidaire de la première plateforme , ainsi qu'une tête d'aube solidaire de la seconde plateforme. L'ensemble comprenant un premier tourillon de guidage en rotation (34) solidaire de la première plateforme, ainsi qu'un second tourillon de guidage en rotation (36) solidaire de la seconde plateforme.

L'invention concerne également un redresseur (18a, 18b) de compresseur de turbomachine d'aéronef, comprenant un carter interne (15) et un carter externe (16), ainsi qu'une pluralité de tels ensembles, les ensembles se succédant circonférentiellement, avec leurs premières plateformes coopérant avec le carter interne et leurs secondes plateformes coopérant avec le carter externe, le redresseur comprenant également un système de commande (22) de calage en incidence de ces ensembles.

L'invention concerne de plus un compresseur (4, 6) de turbomachine d'aéronef comprenant au moins un tel redresseur, ainsi qu'une turbomachine d'aéronef (1) comprenant un tel compresseur, préférentiellement un compresseur basse pression.

## Description

### DOMAINE TECHNIQUE

La présente invention se rapporte au domaine des redresseurs de compresseur de turbomachine d'aéronef. Elle s'applique à tout type de turbomachine, en particulier les turboréacteurs et les turbopropulseurs.

### ETAT DE LA TECHNIQUE ANTERIEURE

Les redresseurs de compresseur de turbomachine correspondent à des roues de stator, comprenant des aubes à calage variable également dénommées aubes VSV (de l'anglais *« Variable Stagger Vanes »* ou « *Variable Stator Vanes »*)*.*

Un système de commande est prévu pour commander le calage en incidence de ces aubes, c'est-à-dire pour piloter simultanément l'angle d'incidence de chacune des aubes d'un même redresseur, en fonction du besoin aérodynamique au sein du compresseur. Un tel système de commande de calage est par exemple connu du document EP 1 489 267 A1, ou encore du document EP 3 290 657 A1.

Au sein d'un redresseur, chaque aube de stator est montée individuellement sur un carter interne et sur un carter externe de ce redresseur, de manière à pouvoir pivoter selon un axe de rotation, également dit axe de calage en incidence de l'aube.

Pour ce faire, les carters du redresseur, également dits virole interne et virole externe, doivent présenter des orifices pour le logement de tourillons de guidage en rotation des aubes, ces orifices pouvant être réalisés à travers de bossages prévus sur les carters, en particulier sur le carter externe du redresseur.

Au vu de ce qui précède, le montage individuel de chaque aube de stator, sur les carters du redresseur, complique la fabrication de ce dernier. La fabrication est également complexifiée par le système de commande en incidence, qui nécessite autant de levier de commande que d'aubes de stator au sein du redresseur. En outre, le nombre maximum d'aubes intégrables reste limité par l'espace entre les orifices pour le logement des tourillons, et par l'espace entre platines ou plateformes. L'usure des douilles de guidage autour des tourillons de rotation peut également être un inconvénient, causé par la faible surface de friction et par la pression élevée de matage.

Il est également noté la présence d'un couple à reprendre, provenant des efforts aérodynamiques statiques et dynamiques agissant sur l'aube, et du bras de levier entre l'axe de pivot et le centre d'application des efforts aérodynamiques.

Outre la fabrication complexe, cette conception conventionnelle des redresseurs de compresseur entraîne également une maintenance relativement conséquente.

### EXPOSÉ DE L'INVENTION

Pour répondre au moins partiellement aux problèmes mentionnés ci-dessus relatifs aux réalisations de l'art antérieur, l'invention a tout d'abord pour objet un ensemble destiné à être calé en incidence au sein d'un redresseur de compresseur de turbomachine d'aéronef, comportant une première plateforme et une seconde plateforme, et deux aubes de stator présentant chacune un pied d'aube solidaire de la première plateforme, ainsi qu'une tête d'aube solidaire de la seconde plateforme. De plus, l'ensemble comprend un premier tourillon de guidage en rotation solidaire de la première plateforme, ainsi qu'un second tourillon de guidage en rotation solidaire de la seconde plateforme.

L'invention a également pour objet un redresseur de compresseur de turbomachine d'aéronef, comprenant un carter interne et un carter externe, ainsi qu'une pluralité de tels ensembles se succédant circonférentiellement, avec leurs premières plateformes coopérant avec le carter interne et leurs secondes plateformes coopérant avec le carter externe, le redresseur comprenant également un système de commande de calage en incidence de ces ensembles.

L'invention a aussi pour objet un compresseur de turbomachine d'aéronef, comprenant au moins un tel redresseur.

Enfin, l'invention a également pour objet une turbomachine d'aéronef comprenant un tel compresseur, le compresseur étant préférentiellement un compresseur basse pression.

L'invention consiste ainsi en une rupture technologique, en prévoyant non plus de commander individuellement les aubes du redresseur en incidence, mais en les commandant par doublet d'aubes.

La fabrication et l'assemblage du redresseur s'en trouvent avantageusement simplifiés, en particulier par la diminution du nombre d'orifices à travers les carters du redresseur, la diminution du nombre de leviers de commande, etc. Il en résulte également une diminution de la masse globale du redresseur. L'invention est donc le résultat de recherches technologiques visant à améliorer de manière significative les performances des avions et, en ce sens, contribue à la réduction de l'impact environnemental de ces avions (décarbonation).

La conception proposée simplifie également les opérations de maintenance, principalement en raison de la diminution du nombre de pièces formant le redresseur de compresseur.

Puisque chaque ensemble selon l'invention comprend un doublet d'aubes, les orifices de montage à travers les carters du redresseur peuvent être davantage espacés les uns des autres, ou il est possible d'augmenter le nombre d'aubes sans trop rapprocher les orifices de montage. Outre la simplification de la fabrication, cette spécificité offre au carter externe du redresseur une meilleure capacité à se déformer en traction et en compression axiale, sans la nécessité de réaliser localement des épaississements dédiés à la tenue mécanique de la pièce.

Enfin, la conception propre à l'invention se trouve particulièrement bien adaptée pour la fabrication de certaines pièces en matériau composite, comme le carter interne et/ou le carter externe, ou encore l'anneau de commande synchronisée appartenant au système de commande de calage en incidence des ensembles à doublet d'aubes.

Cette conception se trouve également particulièrement adaptée pour l'intégration d'un système de commande à actionneur électrique.

Outre la possibilité de prévoir un nombre d'aubes supérieur, conférant une plus grande solidité, l'invention présente également l'avantage de limiter les effets d'usure, en raison de l'augmentation des surfaces d'appui. Cela réduit avantageusement les opérations de maintenance. De plus, il peut aussi être observé un principe d'auto-compensation du couple aérodynamique, grâce à la symétrie des deux aubes de part et d'autre de l'axe de calage en incidence.

L'invention présente également de préférence les caractéristiques optionnelles suivantes, prises isolément ou en combinaison.

De préférence, les première et seconde plateformes présentent chacune une forme générale de disque.

De préférence, l'ensemble définit un axe de calage en incidence de l'ensemble, les deux aubes de stator étant préférentiellement agencées de part et d'autre de cet axe de calage en incidence.

De préférence, l'axe de calage en incidence de l'ensemble se situe plus proche d'un bord d'attaque des deux aubes de stator, que d'un bord de fuite de ces deux aubes. En avançant cet axe de rotation vers l'amont par rapport aux aubes, cela réduit avantageusement l'écart d'angle d'incidence entre les deux aubes du doublet lorsque l'angle de calage augmente. Le fait d'avancer cet axe de rotation le plus en amont vers le bord d'attaque des aubes permet de privilégier la précision de l'angle à cet endroit.

De préférence, le second tourillon de guidage en rotation comporte une portion de guidage en rotation, et, à son extrémité, une portion d'entrainement en rotation.

De préférence, l'ensemble est réalisé d'une seule pièce, même si d'autres conceptions, basées sur la fixation de plusieurs éléments les uns sur les autres, est également envisageable. Dans la conception préférée d'une seule pièce, dans laquelle l'ensemble est également dit venu de matière, ou monobloc, ou réalisé d'un seul tenant, cet ensemble peut être par exemple usiné, coulé, ou fabriqué de façon additive en métal. Une réalisation en matériau composite est également possible, de préférence à matrice organique. Par exemple, il peut s'agir d'un matériau composite du type comprenant des fibres de verre et/ou de carbone et une matrice thermodurcissable ou thermoplastique.

De préférence, le carter externe est réalisé en matériau composite, et/ou le système de commande de calage en incidence comporte un anneau de commande synchronisée préférentiellement réalisé en matériau composite. L'un des avantages de ce type de fabrication, outre le gain en masse, réside dans le faible coefficient d'expansion thermique des matériaux composites, de l'ordre de dix fois moins élevé que celui des matériaux métalliques.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels :
- la figure 1 représente une vue schématique en coupe axiale d'une turbomachine d'aéronef selon l'invention ;
- la figure 2 représente une vue en demi-coupe axiale d'une partie d'un compresseur de la turbomachine montrée sur la figure précédente ;
- la figure 3 représente une vue en perspective de la partie du compresseur montré sur la figure précédente ;
- la figure 4 représente une vue agrandie et partielle d'un redresseur du compresseur montré sur les figures 2 et 3.

### EXPOSÉ DÉTAILLÉ DE MODES DE RÉALISATION PRÉFÉRÉS

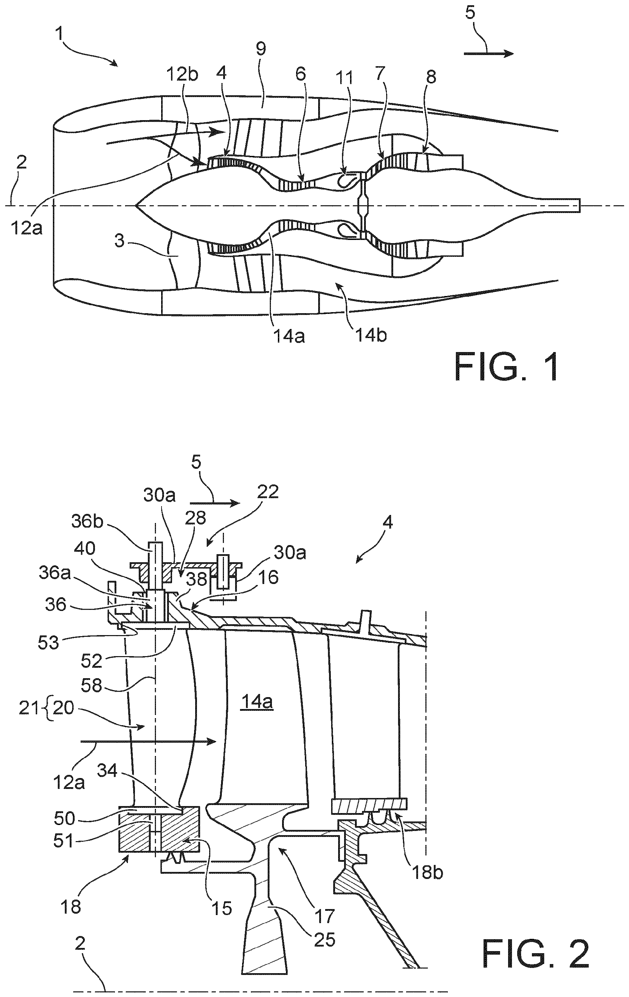

En référence tout d'abord à la figure 1, il est représenté une turbomachine 1 d'aéronef, selon un mode de réalisation préféré de l'invention. Il s'agit ici d'un turboréacteur à double flux et à double corps. Néanmoins, il pourrait s'agir d'une turbomachine d'un autre type, par exemple d'un turbopropulseur, sans sortir du cadre de l'invention.

Le turboréacteur 1 présente un axe central longitudinal 2 autour duquel s'étendent ses différents composants. Il comprend, d'amont en aval selon une direction principale 5 d'écoulement des gaz à travers ce turboréacteur, une soufflante 3, un compresseur basse pression 4, un compresseur haute pression 6, une chambre de combustion 11, une turbine haute pression 7 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine principale 14a de circulation des gaz traversant les compresseurs 4, 6, la chambre de combustion 11 et les turbines 7, 8. Le flux secondaire 12b s'écoule quant à lui dans une veine secondaire 14b délimitée radialement vers l'extérieur par un carter moteur, entouré d'une nacelle 9.

Les compresseurs 4, 6 et les turbines 7, 8 sont réalisés par l'alternance de roues mobiles, dites roues de rotor, et de roues fixes, dites roues de stator. Dans le cadre des compresseurs 4, 6, les roues de stator sont conventionnellement appelées redresseurs de compresseur.

L'invention porte sur la conception de ces redresseurs, au sein de l'un quelconque des compresseurs 4, 6. Par la suite, il sera décrit un mode de réalisation préféré où l'invention est intégrée au compresseur basse pression 4, mais l'invention se révèle donc aussi applicable au compresseur haute pression 6.

En référence à la figure 2, comme évoqué ci-dessus, le compresseur 4 comprend une alternance de roues mobiles 17 et de redresseurs 18a, 18b, dans la direction axiale du turboréacteur. Ainsi, il est représenté, de la gauche vers la droite sur cette figure 2, un premier redresseur 18a, une roue mobile 17, et un second redresseur 18b. Par la suite, seul le premier redresseur 18a sera décrit, mais il est entendu que le second redresseur 18b peut présenter une conception identique ou similaire.

Le redresseur 18a est assimilable à une couronne annulaire d'aubes de stator 20 montées sur un carter externe 16 de ce redresseur, de préférence en forme de virole centrée sur l'axe 2. Ces aubes de stator 20 sont destinées à être calées simultanément en incidence, en fonction de paramètres aérodynamiques précis, à l'aide d'un système 22 de commande d'aubes.

L'une des particularités de l'invention réside dans le fait que les aubes de stator 20 sont réparties en doublet d'aubes au sein d'ensembles 21 spécifiques à l'invention, chacun destiné à être calé en incidence au sein du redresseur, via le système de commande 22. Les ensembles 21 se succèdent circonférentiellement, comme les aubes au sein d'un redresseur classique, à la différence que ces aubes sont ici regroupées en doublet au sein des ensembles 21.

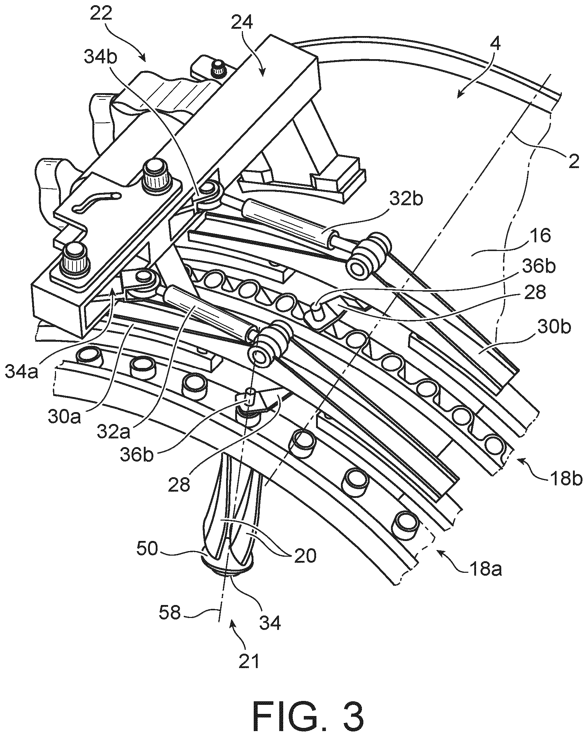

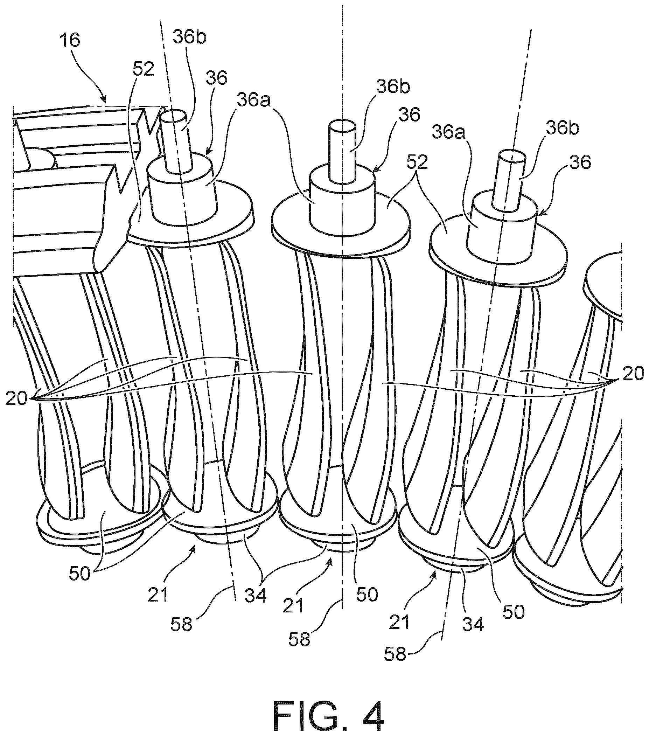

En référence aux figures 2 à 4, chaque ensemble 21 comporte une première plateforme 50, ou plateforme radialement interne, ainsi qu'une seconde plateforme 52, ou plateforme radialement externe. Chacune des deux plateformes 50, 52 présente une forme générale de disque, éventuellement tronqué. La seconde plateforme 52 est logée dans un évidement 53 pratiqué sur la surface interne du carter externe 16, tandis que la première plateforme 50 est logée dans un évidement 51 pratiqué sur la surface externe d'un carter interne 15 du redresseur 18a, se présentant aussi sous la forme préférentielle d'une virole centrée sur l'axe 2. Le logement des plateformes 50, 52 dans les évidements 51, 53 permet de conserver ces plateformes affleurantes ou sensiblement affleurantes par rapport aux deux surfaces de délimitation radiale de la veine principale 14a. En effet, chacune des plateformes 50, 52 participe également à la délimitation radiale de la veine principale 14a. Chaque ensemble 21 comporte également deux aubes de stator 20, disposées de manière adjacente circonférentiellement, et sensiblement parallèlement. Elles présentant chacune un pied d'aube solidaire de la première plateforme 50, ainsi qu'une tête d'aube solidaire de la seconde plateforme 52.

Chaque ensemble 21 définit un axe de calage en incidence 58 de l'ensemble, qui correspond à l'axe autour duquel l'ensemble 21 est mis en rotation relativement aux deux carters 15, 16, de façon à adopter l'incidence souhaitée pour le doublet d'aubes 20. Les deux aubes de stator 20 de cet ensemble 21 sont alors préférentiellement agencées de part et d'autre de cet axe de calage en incidence 58. De plus, l'axe de calage en incidence 58 se situe de préférence plus proche d'un bord d'attaque des deux aubes, que d'un bord de fuite de ces deux aubes. En avançant cet axe de rotation 58 vers l'amont par rapport aux aubes 20, cela réduit avantageusement l'écart d'angle d'incidence entre les deux aubes du doublet lorsque l'angle de calage augmente. Le fait d'avancer cet axe de rotation 58 le plus en amont, vers le bord d'attaque des aubes, permet de privilégier la précision de l'angle à cet endroit.

Radialement vers l'intérieur, la première plateforme 50 est prolongée radialement vers l'intérieur par un premier tourillon de guidage en rotation 34, reçu dans un orifice de guidage de l'ensemble 21 réalisé dans le carter interne 15. Cet orifice de guidage débouche radialement vers l'extérieur dans l'évidement 51 recevant la première plateforme 50. De manière analogue, la seconde plateforme 52 est prolongée radialement vers l'extérieur par un second tourillon de guidage en rotation 36, reçu dans un orifice de guidage de l'ensemble 21 réalisé dans le carter externe 16. Cet orifice de guidage débouche radialement vers l'intérieur dans l'évidement 53 recevant la seconde plateforme 52.

Des douilles peuvent être interposées entre les tourillons 34, 36 et leurs orifices de guidage respectifs, afin de faciliter la rotation durant les changements de calage en incidence des ensembles 21 à doublet d'aubes.

Le second tourillon 36 comporte une portion de guidage en rotation 36a, celle qui est reçue dans l'orifice de guidage, et il comporte également, à son extrémité radialement externe, une portion d'entrainement en rotation 36b destinée à coopérer avec le système de commande. Les deux portions 36a, 36b de chaque second tourillon 36 sont centrées sur l'axe de calage en incidence 58, et séparées l'une de l'autre par un épaulement.

Chaque ensemble 21 est préférentiellement réalisé d'une seule pièce, c'est-à-dire venu de matière. Cette pièce unique est par exemple coulée, usinée, fabriquée de manière additive à partir d'un ou plusieurs matériaux métalliques, ou encore réalisée en matériau composite, de préférence à matrice organique.

Une réalisation en matériau composite est privilégiée pour le carter externe 16, et éventuellement aussi pour le carter interne 15.

De manière conventionnelle, le système de commande 22 comporte tout d'abord une partie fixe essentiellement constituée d'un boîtier 24, monté fixement sur la surface extérieure du carter externe 16. Ce boîtier 24 sert à l'articulation de guignols, comme cela sera détaillé ci-après.

Le système de commande 22 comporte également des leviers 28, chacun d'eux coopérant avec la portion d'entrainement en rotation 36b de l'un des ensembles 21 à doublet de pales. Les leviers 28 sont eux-mêmes commandés par un anneau de commande synchronisée, permettant le calage simultané des ensembles 21 d'un même redresseur. Ainsi, le premier redresseur 18a est associé à un premier anneau de commande 30a centré sur l'axe 2 et relié à l'ensemble des leviers 28 commandant les ensembles 21 du premier redresseur, tandis que le second redresseur 18b est associé à un second anneau de commande 30b également centré sur l'axe 2, et relié à l'ensemble des leviers 28 commandant les aubes du second redresseur.

Le système de commande 22 comprend également un premier organe de sortie 32a en forme de bielle, commandant la rotation du premier anneau 30a autour de l'axe 2, tandis que le second organe de sortie 32b en forme de bielle commande le second anneau 30b en rotation, également autour de l'axe 2.

Les deux bielles 32a, 32b sont respectivement commandées par deux guignols 34a, 34b articulés sur le boîtier 24 du système, d'une manière connue et qui ne sera pas davantage détaillée.

Enfin, il est noté que l'actionneur du système de commande 22 peut être électrique, et que les anneaux de commande synchronisée 30a, 30b sont préférentiellement réalisés en matériau composite.

Bien entendu, diverses modifications peuvent être apportées par l'homme du métier à l'invention qui vient d'être décrite, uniquement à titre d'exemples non limitatifs.

## Revendications

1. Ensemble (21) destiné à être calé en incidence au sein d'un redresseur (18a, 18b) de compresseur de turbomachine d'aéronef, comportant une première plateforme (50) et une seconde plateforme (52), **caractérisé en ce qu'**il comprend également deux aubes de stator (20) présentant chacune un pied d'aube solidaire de la première plateforme (50), ainsi qu'une tête d'aube solidaire de la seconde plateforme (52), l'ensemble comprenant un premier tourillon de guidage en rotation (34) solidaire de la première plateforme (50), ainsi qu'un second tourillon de guidage en rotation (36) solidaire de la seconde plateforme (52).

2. Ensemble selon la revendication 1, **caractérisé en ce que** les première et seconde plateformes (50, 52) présentent chacune une forme générale de disque.

3. Ensemble selon la revendication 1 ou 2, **caractérisé en ce qu'**il définit un axe de calage en incidence (58) de l'ensemble, les deux aubes de stator (20) étant préférentiellement agencées de part et d'autre de cet axe de calage en incidence (58).

4. Ensemble selon l'une quelconque des revendications précédentes, **caractérisé en ce que** l'axe de calage en incidence (58) de l'ensemble se situe plus proche d'un bord d'attaque des deux aubes de stator, que d'un bord de fuite de ces deux aubes.

5. Ensemble selon l'une quelconque des revendications précédentes, **caractérisé en ce que** le second tourillon de guidage en rotation (36) comporte une portion de guidage en rotation (36a), et, à son extrémité, une portion d'entrainement en rotation (36b).

6. Ensemble selon l'une quelconque des revendications précédentes, **caractérisé en ce qu'**il est réalisé d'une seule pièce.

7. Redresseur (18a, 18b) de compresseur de turbomachine d'aéronef, comprenant un carter interne (15) et un carter externe (16), ainsi qu'une pluralité d'ensembles (21) selon l'une quelconque des revendications précédentes, les ensembles (21) se succédant circonférentiellement, avec leurs premières plateformes (50) coopérant avec le carter interne (15) et leurs secondes plateformes (52) coopérant avec le carter externe (16), le redresseur comprenant également un système de commande (22) de calage en incidence de ces ensembles.

8. Redresseur selon la revendication précédente, **caractérisé en ce que** le carter externe (16) est réalisé en matériau composite, et/ou **en ce que** le système de commande de calage en incidence (22) comporte un anneau de commande synchronisée (30a, 30b) préférentiellement réalisé en matériau composite.

9. Compresseur (4, 6) de turbomachine d'aéronef, comprenant au moins un redresseur (18a, 18b) selon la revendication 7 ou 8.

10. Turbomachine d'aéronef (1) comprenant un compresseur (4, 6) selon la revendication précédente, le compresseur étant préférentiellement un compresseur basse pression.
